(19) Europäisches Patentamt
European Patent Office
Office européen des brevets

(11) **EP 1 227 602 A1**

(12) **EUROPEAN PATENT APPLICATION**

(43) Date of publication:
**31.07.2002 Bulletin 2002/31**

(51) Int Cl.⁷: **H04B 7/26**, H04J 3/16

(21) Application number: **01300598.8**

(22) Date of filing: **24.01.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **LUCENT TECHNOLOGIES INC.**
**Murray Hill, New Jersey 07974-0636 (US)**

(72) Inventors:
• **Eloy, Stephane**
  **92400 Courbevoie (FR)**

• **Falaki, Hamid Reza**
  **Swindon, Wiltshire SN5 5AA (GB)**
• **Karimi, Hamid Reza**
  **Swinson, Wiltshire SN5 5BJ (GB)**
• **Le Goff, Yvon**
  **22700 Perros-Guirec (FR)**

(74) Representative:
**Buckley, Christopher Simon Thirsk et al**
**Lucent Technologies (UK) Ltd,**
**5 Mornington Road**
**Woodford Green, Essex IG8 0TU (GB)**

(54) **Method for dynamic allocation of timeslots in a TDD communication system**

(57)     In order to reduce interference between physically close base and mobile stations belonging to uncoordinated systems of different operators, in a cellular time division telecommunications system, e.g. the TDD mode of UMTS, a method of operation comprises providing a sequence of time frames, each time frame including a plurality of time slots, each time slot having an allocated uplink or downlink channel, wherein the positions of said time slots of said channels are changed in consecutive time frames of said sequence according to a deterministic sequence, e.g. a cyclic rotation. In an initial set up operation, the base station may instruct a mobile station to transmit or receive in certain time slots, and that these time slots should be changed in succeeding frames according to a predefined algorithm transmitted to the mobile station.

FIG. 4

## Description

The present invention relates to cellular time division telecommunications systems, particularly though not exclusively UMTS (Universal Mobile Terrestrial System).

In the present specification, the term base station refers to a radio station controlling a cell, and includes a Node B of a UMTS system. The term mobile station refers to a user device which may move from cell to cell, and includes User Equipment of a UMTS system.

A problem of interference arises, particularly when two base stations belonging to different operators, or belonging to the same operator but operating in uncoordinated modes, are positioned close to one another. This problem is particularly acute with UTRA-TDD (Time Division Duplex) where both uplink (UL) and downlink (DL) transmissions take place on a single wideband (5MHz) frequency channel. There is a significant risk that uncoordinated base stations will be operating at the same or adjacent frequency channels. The situation is not as serious for GSM, where UL and DL transmissions are separated in frequency, and there is a wide range of frequency channels available, both for UL and DL.

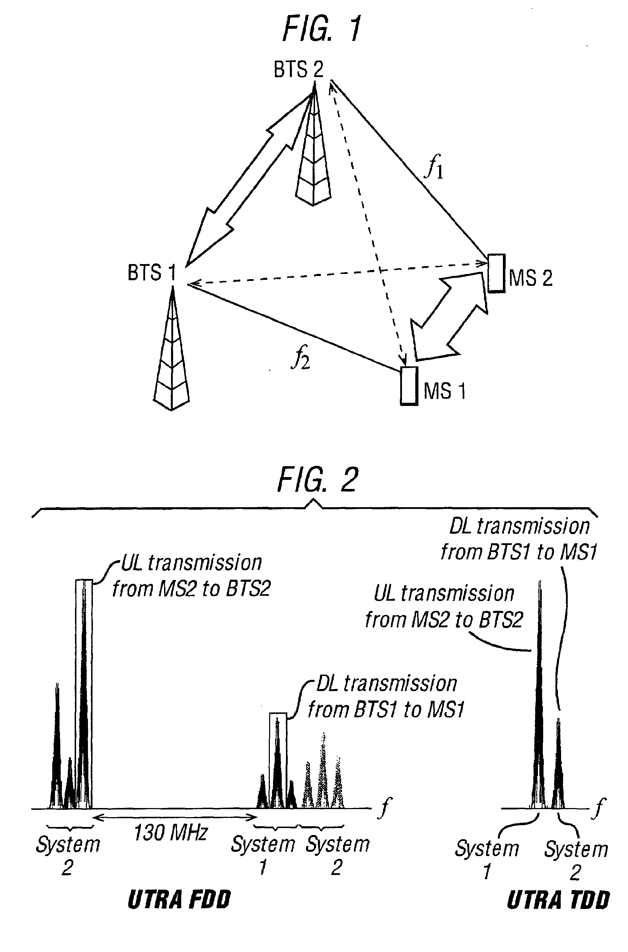

The situation is shown in Figure 1. Two uncoordinated base stations BTS1, BTS2 belonging to different UTRA-TDD operators 1 and 2, occupy adjacent-channels (frequencies $f_1$ and $f_2=f_1\pm5MHz$) serving the same geographical area. Figure 1 depicts the interference possibilities between the base stations BTS 1, 2 and mobile stations MS1, MS2 belonging to the two operators. It is assumed there is no coordination or synchronization between the two operators. This is a realistic assumption and precludes any form of cooperative dynamic channel allocation. It is also assumed that Uplink/Downlink switching points may or may not be the same in the two systems, although in this example they are shown the same for simplicity. Two types of adjacent-channel interference exist in such environments:

1. BTS-to-MS & MS-to-BTS — This is characteristic of all cellular systems, FDD or TDD. Any mobile station receives interference from adjacent-channel downlink transmissions by other base stations. Similarly a base station receives interference from adjacent-channel uplink transmissions by other mobile stations.

2. BTS-to-BTS & MS-to-MS — This is characteristic of TDD systems only, where radios transmit and receive at the same frequency. In a FDD system, the duplex frequency separation between the uplink and downlink (130 MHz for UTRA-FDD) allows the adjacent-channel interference between two mobile stations or two base stations to be suppressed via appropriate filtering at the receiver.

In UTRA-TDD, the duplex separation between uplink and downlink is zero and the interference can be significant, especially between closely-spaced radios. The difference between FDD and TDD in this respect is shown in Figure 2 for the case of MS-to-MS interference, where MS-2 is transmitting on an uplink and MS1 is receiving on a downlink. It may be seen that in UTRA-FDD a mobile station's receiver is immune to transmissions from other mobile stations due to the duplex separation. In UTRA-TDD, closely positioned mobile stations can result in significant interference.

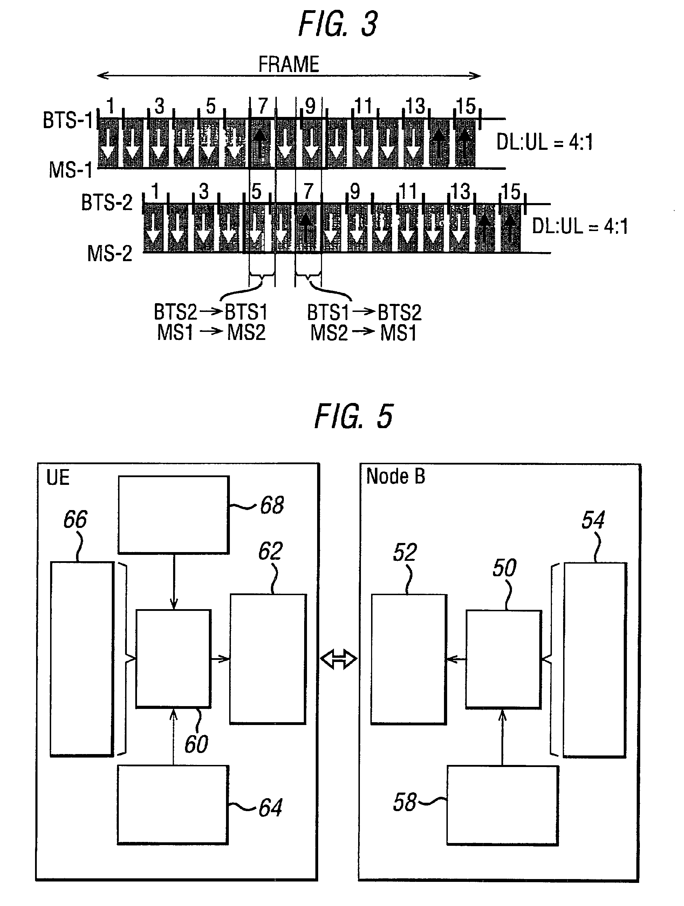

Figure 3 depicts the situation in UTRA-TDD when MS1 in system-1 is allocated channels in slots 7, 8, 9 and MS2 in system-2 is allocated channels in slots 5, 6, 7. Due to the lack of coordination between the two systems, significant interference between the two mobile stations occurs.

The problem of such TDD interference is discussed in "WCDMA for UMTS" Holma et al, Wiley, 2000, pages 296 - 301. After a discussion of the issues involved, it is concluded that frame-level synchronisation of each operators' UTRA-TDD base stations is required.

However, the option of synchronisation between different operators clearly involves the goodwill and agreement of the different operators, which may not in all circumstances be forthcoming.

## Summary of the Invention

It is an object of the invention to overcome or at least reduce the above mentioned problem of interference.

The present invention provides in a first aspect, in a cellular time division telecommunications system, a method of operation comprising providing in a radio link a sequence of time frames, each time frame including a plurality of time slots, each time slot having an allocated channel, characterised in that the positions of said time slots and/or said allocated channels are changed in subsequent time frames of said sequence in a predetermined manner.

In a further aspect, the invention provides in a cellular telecommunications system, apparatus for providing time division operation in a radio link between a base station and mobile stations within the cell of the base station, comprising:

means for providing a series of time frames, each time frame including a plurality of time slots, means for allocating a predetermined uplink or downlink channel to each said time slot, characterised by means for changing the positions of said time slots and/or the allocated channels in subsequent frames of the series in a predetermined manner.

Where the system of the invention is UMTS or GSM, said channels are termed physical channels. In UMTS, time frames and time slots are defined as a continuous sequence of time intervals - see 3GPP TS 25.221. In a series of time frames, a physical channel is allocated one or more time slots within each frame. In accordance with the invention, in the situation where a mobile station has perhaps a section of adjacent time slots allocated to it within each time frame, the position of these time slots is changed from frame to frame. Thus, if another uncoordinated operator with an adjacent cell has a mobile station with a similar section of adjacent time slots, the risk of interference of the time slots over a sequence of frames is drastically reduced, since although the time slots may overlap in one frame period, in the succeeding frame period, the time slots will probably not overlap, at least not to the same extent. In such a system, the present invention is implemented by changing the physical channel allocation for the mobile station from frame to frame. However the present invention does not exclude systems wherein it is appropriate to change the time slot positioning subsequent to channel allocation.

The present invention is not dependent on each uncoordinated operator implementing the invention. Only one operator need implement the invention in order to "break-up" any significant interference between neighbouring mobile stations.

The invention is applicable both to reducing interference between mobile stations, and to reducing interference between base stations.

In a practical situation, the channels allocated to particular time slots will change over a period of time, as one call function is completed and another channel is allocated for another function. The changing, in accordance with the invention, of the order of the channels in consecutive time frames is independent of any such long term changing of channels allocated. However it is possible in accordance with the invention to dynamically initiate or terminate the method of the invention in accordance with the nature of the channel allocation. For example if one mobile station has allocated a consecutive block of time slots for downlink transmission, it would be desirable to initiate the method of the invention. It is further possible that only some of the entire set of the slots within a time frame (15 for UMTS) are subject to the method of the present invention.

The predetermined manner of changing the positions of the channels, or time slots, is preferably a deterministic sequence. The channels or time slots of adjacent frames may be merely rotated by one or a predetermined number so that time slot 1 in one frame becomes time slot 2 or (2 + n) in the next frame, and time slot 3 or (3 + 2n) in the second succeeding frame. However, other sequences may be envisaged, as for example a known predetermined pseudo-random sequence, or a sequence obtained by consulting a table of values

In a preferred method of implementation, when a mobile station is synchronised with a base station, the mobile station is instructed to receive or transmit with appropriate channels on predetermined time slots within each frame. The mobile station is instructed that the time slots should be computed for each successive frame in accordance with a predefined algorithm, as will become clear hereinafter.

## Brief Description of the Drawings

A preferred embodiment of the invention will now be described merely by way of example with reference to the accompanying drawings wherein:

**Figure 1** is a schematic view showing potential sources of interference in UTRA-TDD systems of uncoordinated operators;
**Figure 2** is a schematic graphical representation of neighbouring frequency bands in respective FDD and TDD systems of uncoordinated operators;
**Figure 3** is a schematic view of time slots within time frames of two uncoordinated operators showing the risk of interference;
**Figure 4** is a sequence of diagrams showing time frames of uncoordinated operators and implementing the method in accordance with the invention; and
**Figure 5** is a schematic block diagram of a base station and mobile station incorporating a preferred embodiment of the invention.

## Description of the Preferred Embodiment

In UTRA-TDD signal bursts are transmitted in sequential frames (radio frames), each ten milliseconds long. There are fifteen time slots within each frame and each time slot occupies 0.577 milliseconds. In the case of asymmetric allocation of time slots, for example Internet data traffic, there is a significant risk that two closely spaced mobile stations belonging to different operators may have a group of consecutive time slots which overlap one another in time. If one mobile station is transmitting while the other is receiving in such time slots, there is a risk of significant interference between the mobile stations. This is shown in **Figure 3** where in slot 7 of system 1, mobile station MS-1 is transmitting in an uplink slot, and this overlaps slot 5 in system 2 where mobile station 2 is receiving in a downlink slot. Significant interference will therefore occur. Interference will not occur to such an extent in slot 8 of system 1 and slot 6 of system 2 since both are downlink slots, but significant interference will arise again during slot 9 of system 1 which is a downlink slot, and slot 7 of system 2 which is an uplink slot where mobile station 2 is transmitting.

With fixed slot allocation, the closely-spaced mobile stations will strongly interfere with one another for the total duration of the calls. The interference is distributed in accordance with the invention across all mobile stations in the two cells by "time slot hopping". Each operator is assigned a unique deterministic "hopping sequence" to ensure appropriate interference averaging amongst the mobile stations.

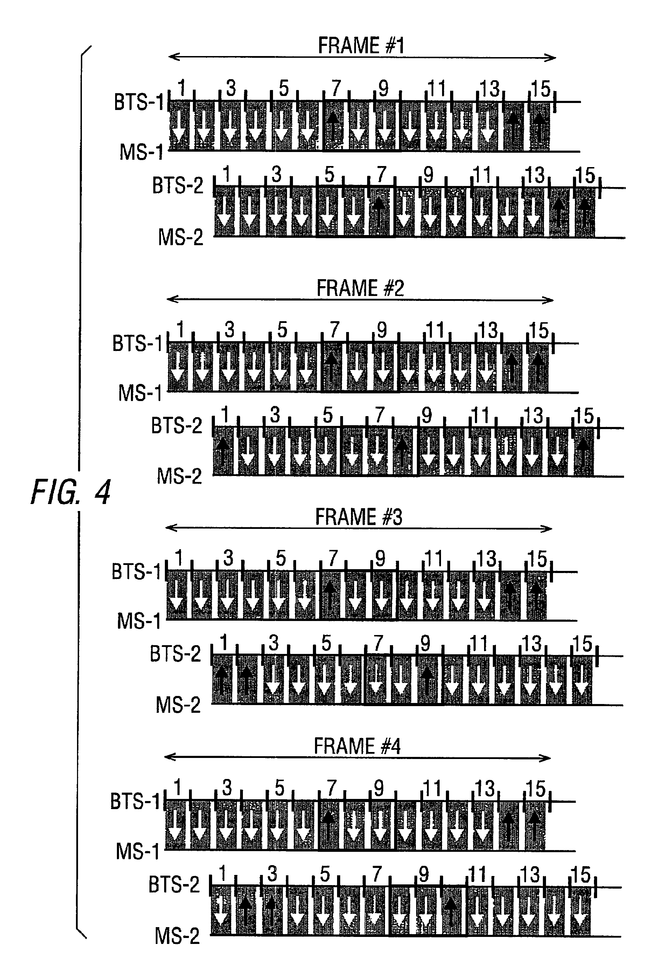

In one realization, the hopping sequence can simply consist of a cyclic shift of the slot-allocations in succeeding frames. For example, while the time slot allocations are fixed for one operator, the time slot allocations can be advanced/retarded by *n* slots per frame for the adjacent channel operators. This is illustrated in **Figure 4** for the case of *n*=1 and four frames.

Time slot hopping mitigates both the MS-to-MS interference and the BTS-to-BTS interference. The BTS-to-BTS interference can be further controlled by the use of directional antennas and sectorization.

Referring to **Figure 5,** each base station (Node B) has a means 50 for defining 15 time slots within each 10ms radio frame for a transceiver 52, and a processor 54 for allocating or scheduling the time slots within each frame with uplink or downlink physical channels . This scheduling is done by the upper layers of the network in the manner prescribed by the relevant 3GPP standards. In particular the transport and logical channels of the MAC and RLC layers are employed in accordance with the requirements for the network. A means 58, comprising a processor and stored algorithm, is provided for cyclically rotating the time slot sequence (i.e. the channel allocation) for successive frames by a predetermined number of time slots.

Similarly, each mobile station UE has means 60 defining a time slot structure similar to that of the node B for a transceiver 62. In addition, means 64 are provided in each UE for synchronising the time slots of the UE with those of the node B. A processor 66 allocates or schedules the time slots within each frame with uplink or downlink physical channels in cooperation with means 54 in Node B . The UE has a means 68, comprising a processor and stored algorithm, for cyclically rotating the time slot sequence (channel allocation) for successive frames by a predetermined number of time slots.

In use, When UE registers with Node B on entry to the cell, UE synchronizes its timebase with means 64 to that of the Node B. At call set-up, the Node B instructs the UE to receive on slots (say) nr1 and nr2 and to transmit on slot (say) nt1 and at each frame to update the slot indexes by the following rule:

nr1 = nr1 + shift_value; if nr1 > 15 then nr1 = nr1 - 15;

nr2 = nr2 + shift_value; if nr2 > 15 then nr2 = nr2 - 15;

nt1 = nt1 + shift_value; if nt1 > 15 then nt1 = nt1 - 15;

which is basically a cyclic shift. The above algorithm is known at both the Node B and UE in means 58, 68. Parameters such as shift-value may be defined at call set-up by transmission to the UE. The above is just an example: more complex algorithms my be employed.

Thus, as shown in **Figure 4,** in the case where there are two uncoordinated operators transmitting and a first operator (BTS-1, MS-1) is transmitting a constant time slot sequence from frame to frame, and operator 2 (BTS-2, MS-2) having a time slot sequence which changes in accordance with the arrangement shown in **Figure 5** by cyclic rotation of one time slot per frame, the following situation may occur. As shown in **Figure 4** for system 1 slots 7, 8 and 9 are designated for mobile station 1, slot 7 being an uplink slot and slots 8 and 9 being downlink slots. For system 2 slots 5, 6 and 7 are designated for a mobile station 2, slots 5 and 6 being downlink slots and slot 7 being an uplink slot. Since mobile stations 1 and 2 are in close physical proximity, there is significant risk of interference during slot 5 of system 2 and slot 7 of system 2 wherein one mobile station is transmitting while the other is receiving. In the next frame, frame 2, for system 2, the slots allocated to mobile station 2 are now slots 6, 7 and 8, so that only slots 6 and 7 overlap with slots and 8 and 9 of system 1. Slot 8 of system 2 now occurs in slot 10 of system 1, which is designated for another mobile station. In slots 6 and 7 of system 2, these are both downlink slots, as are slots 8 and 9 of system 1. Thus, there is a reduced risk of interference between the two mobile stations in this frame.

In frame 3, as shown in **Figure 4,** the slots reserved for mobile station 2 now occur in slots 7, 8 and 9, so that there is only overlap between the two mobile stations in slot 7 of system 2 which overlaps with slot 9 of system 1. Since these are both downlink slots, there will be a reduced risk of interference in this time frame.

In frame 4, the slots reserved for mobile station 2 in system 2 now occur in slots 8, 9 and 10, wherein there is no substantial overlap with slots 7, 8 and 9 of system 1. Thus, in frame 4 there will be no interference between the two mobile stations.

The cyclic rotation of the slots in system 2 continues and the risk of interference between the two mobile stations does not reappear until the slots reserved for mobile station 2 reappear in slot 5 of system 2. There then occurs interference periods while the time slots for mobile system 2 overlap in time with those of mobile station 1.

**Claims**

1. In a cellular time division telecommunications system, a method of operation comprising providing in a radio link, a sequence of time frames, each time frame including a plurality of time slots, each time slot having an allocated channel, **characterised in that** the positions of said time slots and/or said allocated channels are changed in subsequent time frames of said sequence in a predetermined manner.

2. A method according to claim 1, wherein the positions of said time slots and/or said allocated channels are changed in consecutive time frames of said sequence.

3. A method according to claim 1 or 2, wherein said predetermined manner is provided by a deterministic sequence.

4. A method according to claim 3, wherein the sequence is a cyclic rotation of the channel positions.

5. A method according to claim 4, wherein the cyclic sequence rotates the time slots by one time slot within each succeeding time frame.

6. A method according to any of claims 3 to 5, wherein a mobile station computes the sequence as a real time computation for each time frame.

7. A method according to any preceding claim, wherein in an initial set up operation, a base station instructs a mobile station to transmit and/or receive in certain time slots, and that these time slots should be changed in subsequent frames in accordance with a predefined algorithm.

8. A method according to claim 7, wherein the base station transmits at least part of the predefined algorithm to the mobile station.

9. A method according to any preceding claim, wherein said plurality of time slots constitute all the time slots of the time frame.

10. A method according to any preceding claim, wherein the system is UMTS operating in TDD mode, each base station is a node B and each mobile station is a UE, and said channels are physical channels.

11. In a cellular telecommunications system, apparatus for providing time division operation in a radio link between a base station and mobile stations within the cell of the base station, comprising:

     means for providing a series of time frames (50, 60), each time frame including a plurality of time slots,
     means for allocating a predetermined channel to each said time slot (54, 66), **characterised by**
     means (58, 68) for changing the positions of said time slots and/or the allocated channels in subsequent frames of the series in a predetermined manner.

12. Apparatus according to claim 11, wherein said means for changing changes the positions of said time slots and/or said allocated channels in consecutive time frames of said sequence.

13. Apparatus according to claim 11 or 12, wherein said predetermined manner is provided by a deterministic sequence.

14. Apparatus according to claim 13, wherein the sequence is a cyclic rotation of the channel positions.

15. Apparatus according to claim 14, wherein the cyclic sequence rotates the time slots by one time slot within each succeeding time frame.

16. Apparatus according to any of claims 13 to 15, including a mobile station (UE) having means (68) to compute the sequence as a real time computation for each time frame

17. Apparatus according to any of claims 11 to 16, including a base station (Node B) arranged to instruct a mobile station (UE) to transmit and/or receive in certain time slots, and to instruct the mobile station that these time slots should be changed in subsequent frames in accordance with a predefined algorithm.

18. Apparatus according to claim 17, wherein the base station is arranged to transmit at least part of the predefined algorithm to the base station.

19. Apparatus according to any of claims 11 to 18, wherein said plurality of time slots constitute all the time slots of the time frame.

20. Apparatus according to any of claims 11 to 19, wherein the system is UMTS operating in TDD mode, each base station is a node B and each mobile station is a UE, and said channels are physical channels.

## FIG. 1

## FIG. 2

UL transmission
from MS2 to BTS2

DL transmission
from BTS1 to MS1

UL transmission
from MS2 to BTS2

DL transmission
from BTS1 to MS1

130 MHz

System
2

System
1

System
2

System
1

System
2

$f$

$f$

**UTRA FDD**

**UTRA TDD**

## FIG. 3

FRAME

BTS-1

1    3    5    7    9    11    13    15

DL:UL = 4:1

MS-1

BTS-2

1    3    5    7    9    11    13    15

DL:UL = 4:1

MS-2

BTS2→BTS1        BTS1→BTS2
MS1→MS2          MS2→MS1

## FIG. 5

UE

66

68

62

60

64

Node B

52

50

54

58

FIG. 4

**European Patent Office**

**EUROPEAN SEARCH REPORT**

Application Number

EP 01 30 0598

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 720 321 A (AT & T CORP) 3 July 1996 (1996-07-03)<br><br>* column 1, line 45 - line 54 *<br>* column 8, line 47 - column 10, line 8 *<br>* column 11, line 48 - column 12, line 45 *<br>* column 13, line 4 - line 18 *<br>* column 17, line 4 - column 19, line 43 *<br>* claim 2; figures 8A,8B * | 1-5, 9-15,19, 20 | H04B7/26 H04J3/16 |
| X | EP 0 978 959 A (CIT ALCATEL) 9 February 2000 (2000-02-09)<br>* column 4, line 19 - line 55 *<br>* figure 3 * | 1-5,9, 11-15,19 | |
| X | EP 0 407 367 A (ERICSSON TELEFON AB L M) 9 January 1991 (1991-01-09)<br>* column 3, line 44 - line 52 *<br>* column 4, line 1 - column 6, line 37 *<br>* column 7, line 8 - column 10, line 1 *<br>* figure 4 * | 1-9, 11-19 | |
| | | | **TECHNICAL FIELDS SEARCHED** (Int.Cl.7)<br><br>H04J<br>H04B |

The present search report has been drawn up for all claims

| Place of search | Date of completion of the search | Examiner |
|---|---|---|
| THE HAGUE | 23 July 2001 | Larcinese, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 01 30 0598

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2001

| Patent document cited in search report | | Publication date | Patent family member(s) | | Publication date |
|---|---|---|---|---|---|
| EP 0720321 | A | 03-07-1996 | US | 5602836 A | 11-02-1997 |
| | | | CA | 2162938 A | 28-06-1996 |
| | | | JP | 8274740 A | 18-10-1996 |
| EP 0978959 | A | 09-02-2000 | FR | 2777730 A | 22-10-1999 |
| | | | AU | 2364799 A | 28-10-1999 |
| | | | HU | 9900982 A | 29-11-1999 |
| | | | JP | 2000078649 A | 14-03-2000 |
| EP 0407367 | A | 09-01-1991 | US | 4949395 A | 14-08-1990 |
| | | | AU | 634792 B | 04-03-1993 |
| | | | AU | 5872390 A | 10-01-1991 |
| | | | CA | 2020625 A,C | 08-01-1991 |
| | | | DE | 69030534 D | 28-05-1997 |
| | | | DE | 69030534 T | 07-08-1997 |
| | | | JP | 3046424 A | 27-02-1991 |
| | | | JP | 3101626 B | 23-10-2000 |

EPO FORM P0459

For more details about this annex : see Official Journal of the European Patent Office, No. 12/82